# EUROPÄISCHE PATENTSCHRIFT

(11) **EP 1 740 917 B1**
(45) Veröffentlichungstag und Bekanntmachung des Hinweises auf die Patenterteilung: **07.10.2015**
(21) Anmeldenummer: 05735641.2
(22) Anmeldetag: 25.04.2005
(51) Int. Cl.: B29C 65/06, B29C 65/00, G01P 1/02, G01D 11/24

(54) **SENSORANORDNUNG UND VERFAHREN ZUM HERSTELLEN EINER SENSORANORDNUNG**
SENSOR ARRANGEMENT AND METHOD FOR PRODUCING A SENSOR ARRANGEMENT
ENSEMBLE CAPTEUR ET PROCEDE DE PRODUCTION D'UN ENSEMBLE CAPTEUR

(30) Priorität: 28.04.2004 DE 102004020858
(43) Veröffentlichungstag der Anmeldung: 10.01.2007
(73) Patentinhaber: Continental Automotive GmbH, 30165 Hannover (DE)
(72) Erfinder: SKARPIL, Harry, 44149 Dortmund (DE)
(86) Internationale Anmeldenummer: PCT/EP2005/051836
(87) Internationale Veröffentlichungsnummer: WO 2005/106418

(56) Entgegenhaltungen:
- WO-A-2004/020961
- DE-A1- 4 419 902
- DE-A1- 10 145 679
- DE-A1- 19 947 437
- US-A- 5 504 424

## Beschreibung

Die Erfindung bezieht sich auf eine Sensoranordnung mit einem Flanschbauteil zur externen Befestigung der Sensoranordnung und mit einer mit dem Flanschbauteil fest verbundenen Hülse zur Aufnahme von elektrischen Bauteilen. Außerdem bezieht sich die Erfindung auf ein Verfahren zum Herstellen einer Sensoranordnung.

Es ist eine Sensoranordnung in Form eines induktiven Drehzahlgebers mit einem elektrische Bauteile aufnehmenden Gehäuse mit einem ersten Gehäuseteil, das von einem zweiten, in einem Spritzvorgang aus Kunststoff erzeugten Gehäuseteil teilweise umhüllt ist, wobei in der Kontaktzone beider Gehäuseteile eine dichte Verbindung erzielt ist, bekannt. In das erste Gehäuseteil, das topfförmig ausgebildet ist, ist ein Spulenträger mit einer Spule mit Kontaktstiften und Leitern eingesetzt. Ein Flanschbauteil zur externen Befestigung des Drehzahlgebers ist nicht vorgesehen.

Weiterhin ist eine Vorrichtung zur Erfassung der Drehzahl eines umlaufenden Bauteiles mit einer elektrisch arbeitenden Abtasteinrichtung zum berührungslosen Abtasten des umlaufenden Bauteiles und einer Einrichtung zur Signalaufbereitung der von der Abtasteinrichtung abgegebenen Signale in ein drehzahlproportionales Ausgangssignal bekannt. Die einzelnen Bauteile sind in Kunststoffhalbschalen angeordnet, welche eine Umspritzung aufweisen, die ein einstückiges, geschlossenes Spritzgussgehäuse bildet. Beim Spritzgussvorgang wird an dem Gehäuse ein Befestigungsflansch angespritzt.

Aus der US 5 504 424 A ist eine Sensoranordnung der eingangs genannten Art bekannt, bei der die Hülse in eine Ausnehmung des Flanschbauteils bis zur Anlage an einem Anschlag eingeführt und mit Presspassung in der Ausnehmung gehalten wird.

Aus der DE 199 47 437 A1 ist eine Sensoranordnung der eingangs genannten Art bekannt, bei der der eine Endbereich der Hülse in eine topfartige Aufnahme des Flanschbauteils bis zur Anlage am Boden der topfartigen Ausnehmung eingesetzt und dann mittels Laserschweißen verschweißt ist.

Aus der DE 101 45 679 A1, der DE 44 19 902 A1, und der WO 2004/020961 A ist es bei Sensorbaugruppen bekannt Gehäuseteile durch Reibschweißung miteinander zu verbinden.

Aufgabe der Erfindung ist es, eine Sensoranordnung der eingangs genannten Art zu schaffen, die eine einfache und sichere Verbindung des Flanschbauteils mit der Hülse aufweist. Darüber hinaus ist es Aufgabe der Erfindung, ein Verfahren zum Herstellen einer Sensoranordnung mit einem solchen Flanschbauteil und einer solchen Hülse anzugeben.

Die erstgenannte Aufgabe wird erfindungsgemäß dadurch gelöst, dass die Hülse als Topf mit einem geschlossenen Boden ausgebildet und in einer Ausnehmung des Flanschbauteils bis zu einer frei einstellbaren Funktionslänge eingeführt ist sowie mit dem Flanschbauteil mittels einer Reibschweißung verbunden ist.

Die Erfindung bietet vorteilhaft eine sehr stabile und dauerhaltbare Verbindung von Hülse und Flanschbauteil, die zudem kostengünstig zu fertigen ist. Damit ist die erfindungsgemäße Sensoranordnung insbesondere auch für eine Großserienproduktion, wie sie zum Beispiel in der Kraftfahrzeugfertigung erforderlich ist, geeignet. Beim Reibschweißen werden allgemein Teile in einer hochtourigen Drehvorrichtung aneinander gepresst, wobei das eine Teil festgehalten wird, während das andere Teil sich dreht; nach ausreichender Erwärmung wird der Kraftschluss des Antriebes aufgehoben und die Teile werden durch Druck miteinander verbunden. Aufgrund der hohen mechanischen Belastbarkeit der Verbindung ist die Sensoranordnung gemäß der Erfindung vorteilhaft in Kraftfahrzeugen einsetzbar, da sie den dort ständig auftretenden schwingenden, unter anderem von Fahrerschütterungen herrührenden, Belastungen gut und dauerhaft standzuhalten vermag.

Durch den Boden wird ein einseitiger Verschluss der Hülse erreicht und die in die Hülse aufzunehmenden elektrischen Sensorbauteile werden besonders gut gegen Umwelteinflüsse, insbesondere Feuchtigkeit, geschützt.

Die Hülse kann auf eine durch eine Schweißaufnahme vorbestimmte Länge in die Ausnehmung des Flansches eingeführt werden, so dass in sehr einfacher Weise die Herstellbarkeit von Sensoranordnungen mit Hülsen unterschiedlicher Funktionslängen auf einer einzigen Produktionsanlage möglich ist.

Es ist zum Beispiel vorstellbar, dass eine Reibschweißung von Hülse und Flanschbauteil in Folge vibrierender axialer Bewegung der beiden Bauteile gegeneinander erfolgt. Für eine einfache und sichere Verschweißung weist hingegen, die Ausnehmung einen kreisförmigen Querschnitt und die Hülse eine zylindrische Kontur auf, so dass eine Verschweißung mittels rotatorischer Bewegung der Teile gegeneinander erfolgen kann.

Gemäß einer vorteilhaften Weiterbildung der Erfindung ist der Außendurchmesser der Hülse Spiel gewährend kleiner als der Innendurchmesser der Ausnehmung. Auf diese Weise ist die Hülse leicht auf einer vorbestimmten Länge in die Ausnehmung einführbar.

Ein gezieltes örtliches Reiben der Bauteile aneinander und damit eine definierte Verschweißung kann gemäß einer vorteilhaften Weiterbildung der Erfindung dadurch erreicht werden, dass die Hülse an ihrem Umfang eine der Innenwandung der Ausnehmung zugewandte Auswölbung aufweist und dass die Reibschweißung im Bereich der Auswölbung angeordnet ist.

Zur weiteren Senkung der Herstellkosten der Sensoranordnung und zur zusätzlichen Verminderung einer möglichen Korrosionsgefahr bestehen die Hülse und das Flanschbauteil gemäß einer anderen vorteilhaften Weiterbildung der Erfindung zumindest im Bereich der Reibschweißung aus einem Kunststoff. Dadurch wird zudem das Reibverschweißen vereinfacht.

Ein automatisiertes Zusammenfügen sowie das Reibverschweißen von Hülse und Flanschbauteil wird erleichtert, wenn gemäß einer vorteilhaften Weiterbildung der Erfindung die Hülse an einem offenen Ende an ihrer Innenwandung eine umlaufende Fase aufweist. Damit wird beispielsweise ein Einführen eines Stößels oder eines die Hülse bewegenden Fingers im Fertigungsprozess vereinfacht.

Grundsätzlich kann die erfindungsgemäße Sensoranordnung zur Erfassung beliebiger, insbesondere physikalischer, Größen ausgebildet sein. Hingegen sind aber gemäß einer vorteilhaften Weiterbildung der Erfindung die elektrischen Bauteile Bestandteile eines Sensors, insbesondere eines Hall-Gebers oder eines Temperatursensors oder eines Induktivgebers. Derartige Sensoren, die typischerweise in Kraftfahrzeugen eingesetzt werden, erfordern regelmäßig sowohl eine sichere Funktion unter rauen Umwelteinflüssen als auch eine kostengünstige Herstellbarkeit. Diese Anforderungen werden mit einer erfindungsgemäßen Sensoranordnung besonders gut erfüllt.

Die oben zweitgenannte Aufgabe wird gelöst mit einem Verfahren, bei welchem nacheinander ein Flanschbauteil in eine Schweißaufnahme eingelegt wird, eine zylindrische Hülse mit Spiel in eine Ausnehmung des Flanschbauteils eingeführt wird, ein Stößel in die Hülse diese im Bereich der Innenwandung der Ausnehmung aufweitend eingefahren wird, wobei eine radiale Verpressung von Hülse und Flanschbauteil erfolgt, und Hülse und Flanschbauteil in eine Relativrotation zueinander versetzt werden, wodurch eine Reibschweißung von Hülse und Flanschbauteil erfolgt. Auf diese Weise ist eine zuverlässige, einfache Herstellbarkeit der Sensoranordnung gegeben. Das Verfahren eignet sich insbesondere zum Herstellen einer oben beschriebenen, erfindungsgemäßen Sensoranordnung.

Gemäß einer vorteilhaften Weiterbildung der Erfindung wird die Hülse auf einer durch die Schweißaufnahme vorbestimmten Länge in die Ausnehmung eingeführt. Damit ist in sehr einfacher Weise die Herstellbarkeit von Sensoranordnungen mit Hülsen unterschiedlicher Wirklängen auf einer einzigen Produktionsanlage ermöglicht.

Ausführungsbeispiele der Erfindung sind in der Zeichnung dargestellt und werden im Folgenden näher beschrieben. Es zeigen
- Figur 1: eine Hülse für eine Sensoranordnung,
- Figur 2: einen Kopf eines Stößels für das Herstellen einer Sensoranordnung,
- Figur 3: eine erste Sensoranordnung,
- Figur 4: eine zweite Sensoranordnung und
- Figur 5: eine dritte Sensoranordnung.

Sich entsprechende Bauteile sind in den Figuren jeweils mit gleichen Bezugszeichen versehen.

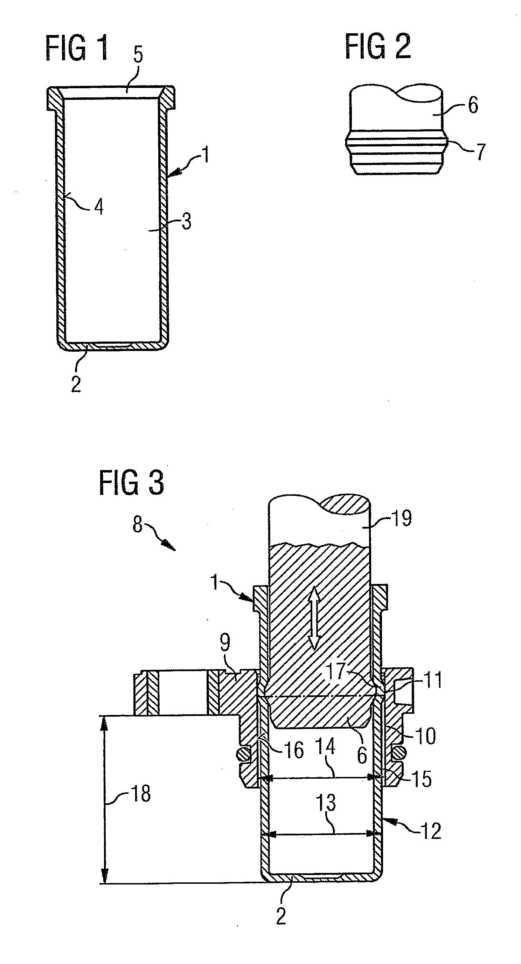

In Figur 1 ist in geschnittener Seitenansicht eine als Topf ausgebildete Hülse 1 für eine Sensoranordnung gezeigt. Die Hülse 1 dient zur Aufnahme hier nicht weiter dargestellter elektrischer Sensorbauteile und ist an ihrem dem Boden 2 abgewandten offenen Ende 3 an ihrer Innenwandung 4 mit einer umlaufenden Fase 5 versehen. Die Fase 5 dient dem erleichterten Einführen eines Stößels beim Herstellen der Sensoranordnung.

Einen Kopf 6 eines entsprechenden Stößels zeigt Figur 2 in einer Seitenansicht. Der Kopf 6 besitzt einen als umlaufender Steg ausgebildeten Gegenhalter 7.

Eine erste Sensoranordnung 8 ist in Figur 3 in geschnittener Seitenansicht dargestellt. Die Sensoranordnung 8 weist ein Flanschbauteil 9 zur externen Befestigung der Sensoranordnung 8 (zum Beispiel an einem Fahrwerkselement eines Kraftfahrzeugs) und eine Hülse 1 zur Aufnahme von hier nicht weiter dargestellten Sensorbauteilen auf. Die Hülse 1, die eine zylindrische Kontur 12 aufweist, ist als Topf mit geschlossenem Boden 2 ausgebildet und in einer kreisförmigen Ausnehmung 10 des Flanschbauteils 9 angeordnet. Eine feste Verbindung von Hülse 1 und Flanschbauteil 9, die beide Kunststoffbauteile sind, ist mittels einer Reibschweißung 11 verwirklicht.

Der Außendurchmesser 13 der Hülse 1 ist kleiner als der Innendurchmesser 14 der Ausnehmung 10, so dass zwischen beiden Bauteilen ein Spiel 15 verbleibt, das durch die Reibschweißung 11 überbrückt ist. Die Hülse 1 weist an ihrem Umfang eine der Innenwandung 16 der Ausnehmung 10 zugewandte Auswölbung 17 auf, und die Reibschweißung ist im Bereich 18 der Auswölbung 17 angeordnet.

Beim Herstellen der Sensoranordnung 8 wird das Flanschbauteil 9 in eine Schweißaufnahme eingelegt. Anschließend wird die Hülse 1 in die Ausnehmung 10 des Flanschbauteils 9 mit einer Spielpassung eingesteckt. Durch die Schweißaufnahme ist eine frei einstellbare Funktionslänge 18 der Sensoranordnung 8, welche Funktionslänge 18 sich aus dem Abstand des Bodens 2 der Hülse 1 von einer Referenzfläche des Flanschbauteils 9 ergibt, vorgegeben. Anschließend fährt ein konischer Stößel 19 mit seinem einen Gegenhalter 7 aufweisenden Kopf 6 in die Hülse 1 ein. Der Außendurchmesser des Stößels 19 ist nur geringfügig kleiner als der Innendurchmesser der Hülse 1. Aufgrund einer mittels des Gegenhalters 7 erzielten Durchmesseraufweitung der Hülse 1 erfolgt eine Verpressung von Hülse 1 und Flanschbauteil 9. Durch eine relative Drehbewegung von Hülse 1 und Flanschbauteil 9 zueinander werden beide Bauteile im Bereich der Reibflächen verschweißt.

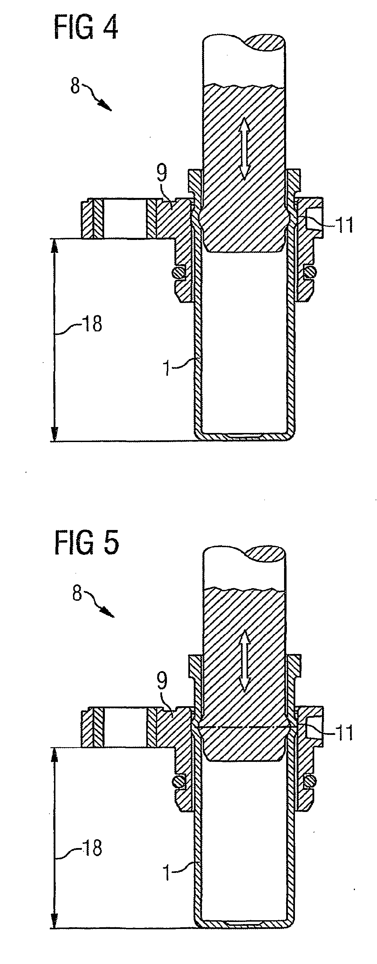

Eine zweite Sensoranordnung 8 mit Flanschbauteil 9 und einen Boden 2 aufweisender Hülse 1, wobei Hülse 1 und Flanschbauteil 9 mittels einer Reibschweißung 11 verbunden sind, zeigt Figur 4. Gegenüber dem Ausführungsbeispiel nach Figur 3 ist hier die Funktionslänge 18 der Sensoranordnung 8 größer.

Eine mittlere Funktionslänge 18 weist eine dritte Sensoranordnung 8 nach Figur 5 auf. Eine Reibschweißung 11 verbindet auch hier ein Flanschbauteil 9 mit einer Hülse 1.

Die verschiedenen Ausführungsbeispiele nach Figuren 3 bis 5, die sich lediglich in der Funktionslänge unterscheiden, machen deutlich, dass die Funktionslänge ausschließlich von dem verwendeten Werkzeug (Schweißaufnahme) bei der Herstellung der Sensoranordnung abhängt, nicht jedoch von der konstruktiven Ausgestaltung der verbundenen Bauteile Hülse und Flanschbauteil. Mit gleichen Bauteilen lassen sich daher (innerhalb der Länge der Hülse) beliebige Funktionslängen realisieren. Zusätzlich ist auch eine Ausrichtung eines Steckers in Abhängigkeit von der Stellung der Hülse denkbar.

## Patentansprüche

1. Sensoranordnung (8) mit einem Flanschbauteil (9) zur externen Befestigung der Sensoranordnung (8) und mit einer mit dem Flanschbauteil (9) fest verbundenen Hülse (1) zur Aufnahme von elektrischen Bauteilen, **dadurch gekenn-zeichnet** , dass
die Hülse (1) in einer Ausnehmung (10) des Flanschbauteils (9) angeordnet ist,
wobei die Ausnehmung (10) einen kreisförmigen Querschnitt und die Hülse (1) eine zylindrische Kontur (12) aufweist, wobei
der Außendurchmesser (13) der Hülse (1) Spiel (15) gewährend kleiner ist als der Innendurchmesser (14) der Ausnehmung (10)
die Hülse (1) an ihrem Umfang eine der Innenwandung (16) der Ausnehmung (10) zugewandte Auswölbung (17) aufweist
und
dass die Hülse (1) in der Ausnehmung (10) durch eine Reibschweißung (11) im Bereich der Auswölbung (17) fest verbunden ist.

2. Sensoranordnung nach Anspruch 1, **dadurch ge-kennzeichnet**, dass die Hülse (1) und das Flanschbauteil (9) zumindest im Bereich der Reibschweißung (11) aus einem Kunststoff bestehen.

3. Sensoranordnung nach einem der vorhergehenden Ansprüche,
**dadurch gekennzeichne**t, dass die Hülse (1) als Topf ausgebildet ist.

4. Sensoranordnung nach einem der vorhergehenden Ansprüche,
**dadurch gekennzeichnet, dass** die Hülse (1) an einem offenen Ende an ihrer Innenwandung (4) eine umlaufende Fase (5) aufweist.

5. Sensoranordnung nach einem der vorhergehenden Ansprüche,
**dadurch gekennzeichnet, dass** die elektrischen Bauteile Bestandteile eines Sensors, insbesondere eines Hall-Gebers oder eines Temperatursensors oder eines Induktivgebers sind.

6. Verfahren zum Herstellen einer Sensoranordnung (8), wobei nacheinander
- ein Flanschbauteil (9) in eine Schweißaufnahme eingelegt wird,
- eine zylindrische Hülse (1) mit Spiel in eine Ausnehmung des Flanschbauteils (9) eingeführt wird,
- ein Stößel (19) in die Hülse (1) diese im Bereich der Innenwandung der Ausnehmung aufweitend eingefahren wird, wobei eine radiale Verpressung von Hülse (1) und Flanschbauteil (9) erfolgt,
- Hülse (1) und Flanschbauteil (9) in eine Relativrotation zueinander versetzt werden, wodurch eine Reibschweißung von Hülse (1) und Flanschbauteil (9) erfolgt.

7. Verfahren nach Anspruch 6, **dadurch gekenn-zeichnet**, dass die Hülse (1) auf einer durch die Schweißaufnahme vorbestimmten Länge in die Ausnehmung eingeführt wird.

## Claims

1. Sensor arrangement (8) having a flange component (9) for externally fastening the sensor arrangement (8) and having a sleeve (1) firmly connected to the flange component (9) for receiving electrical components, **characterized in that** the sleeve (1) is arranged in a recess (10) of the flange component (9), wherein the recess (10) has a circular cross section and the sleeve (1) has a cylindrical contour (12), wherein the outer diameter (13) of the sleeve (1) is less than the inner diameter (14) of the recess (10) so as to provide clearance (15), the sleeve (1) has a protuberance (17) on its circumference facing the inner wall (16) of the recess (10), and **in that** the sleeve (1) is firmly connected in the recess (10) by means of a friction weld (11) in the region of the protuberance (17).

2. Sensor arrangement according to Claim 1, **characterized in that** the sleeve (1) and the flange component (9) consist of a plastic at least in the region of the friction weld (11).

3. Sensor arrangement according to one of the preceding claims, **characterized in that** the sleeve (1) is designed as a cup.

4. Sensor arrangement according to one of the preceding claims, **characterized in that** the sleeve (1) has a circumferential chamfer (5) on its inner wall (4) at an open end.

5. Sensor arrangement according to one of the preceding claims, **characterized in that** the electrical components are components of a sensor, particularly a Hall probe or a temperature sensor or an inductive probe.

6. Method for producing a sensor arrangement (8), wherein sequentially
- a flange component (9) is put into a welding holder,
- a cylindrical sleeve (1) is inserted with clearance into a recess of the flange component (9),
- a plunger (19) is driven into the sleeve (1) so as to widen it in the region of the inner wall of the recess, radial compression of the sleeve (1) and the flange component (9) taking place,
- a relative rotation with respect to one another is imparted to the sleeve (1) and the flange component (9), so that friction welding of the sleeve (1) and the flange component (9) takes place.

7. Method according to Claim 6, **characterized in that** the sleeve (1) is inserted into the recess over a length predetermined by the welding holder.

## Revendications

1. Ensemble capteur (8) avec un composant de bride (9) pour la fixation extérieure de l'ensemble capteur (8) et avec une douille (1) solidement assemblée au composant de bride (9) pour le logement de composants électriques, **caractérisé en ce que**
la douille (1) est disposée dans un évidement (10) du composant de bride (9),
dans lequel l'évidement (10) présente une section transversale circulaire et la douille (1) présente un contour cylindrique (12), dans lequel
le diamètre extérieur (13) de la douille (1) est plus petit en laissant un jeu (15) que le diamètre intérieur (14) de l'évidement (10),
la douille (1) présente à sa périphérie un renflement (17) tourné vers la paroi intérieure (16) de l'élément (10), et
**en ce que** la douille (1) est solidement assemblée dans l'évidement (10) par un soudage par friction (11) dans la région du renflement (17).

2. Ensemble capteur selon la revendication 1, **caractérisé en ce que** la douille (1) et le composant de bride (9) sont constitués d'une matière plastique au moins dans la région du soudage par friction (11).

3. Ensemble capteur selon l'une quelconque des revendications précédentes, **caractérisé en ce que** la douille (1) est réalisée en forme de godet.

4. Ensemble capteur selon l'une quelconque des revendications précédentes, **caractérisé en ce que** la douille (1) présente sur sa paroi intérieure (4) un chanfrein périphérique à une extrémité ouverte.

5. Ensemble capteur selon l'une quelconque des revendications précédentes, **caractérisé en ce que** les composants électriques sont des parties constitutives d'un capteur, en particulier d'un capteur de Hall ou d'un détecteur de température ou d'un capteur inductif.

6. Procédé de fabrication d'un ensemble capteur (8), dans lequel successivement
- on dépose un composant de bride (9) dans un logement de soudage,
- on introduit une douille cylindrique (1) avec du jeu dans un évidement du composant de bride (9),
- on enfonce un poussoir (19) dans la douille (1) en élargissant celle-ci dans la région de la paroi intérieure de l'évidement, effectuant ainsi une compression radiale de la douille (1) et du composant de bride (9),
- on déplace la douille (1) et le composant de bride (9) en rotation relative l'un par rapport à l'autre, provoquant ainsi un soudage par friction de la douille (1) et du composant de bride (9).

7. Procédé selon la revendication 6, **caractérisé en ce que** la douille (1) est introduite dans l'évidement sur une longueur prédéterminée par le logement de soudage.
